# FASCICULE DE BREVET EUROPEEN

(11) **EP 0 396 479 B1**
(45) Date de publication et mention de la délivrance du brevet: **30.03.1994**
(21) Numéro de dépôt: 90420210.8
(22) Date de dépôt: 27.04.1990
(51) Int. Cl.: F16K 5/20, F16K 39/06

(54) **Robinet à tournant sphérique**
Hahn mit Kugelküken
Spherical plug valve

(30) Priorité: 28.04.1989 FR 8906017
(43) Date de publication de la demande: 07.11.1990
(73) Titulaire: VANATOME, F-07100 Annonay (FR)
(72) Inventeur: Martin, Roger, F-07100 Saint Cyr (FR); Buffa, Laurent, Peaugres F-07340 Serrières (FR)
(74) Mandataire: Bratel, Gérard

(56) Documents cités:
- FR-A- 859 489
- FR-A- 1 586 335
- FR-A- 2 218 517
- FR-A- 2 564 558
- GB-A- 969 440
- GB-A- 1 181 228
- US-A- 4 566 672

## Description

La présente invention concerne un robinet à tournant sphérique de type arbré, dans lequel un obturateur ou "tournant" de forme sphérique, monté à l'intérieur du corps du robinet et comportant un passage central, est guidé en rotation dans des paliers et est lié à des moyens de manoeuvre prévus pour le faire pivoter autour d'un axe entre une position de fermeture et une position d'ouverture où le fluide peut s'écouler, suivant la direction d'un axe perpendiculaire à l'axe de rotation du tournant, au travers du passage central de ce tournant.

Plus particulièrement, l'invention se rapporte à un robinet à tournant sphérique répondant à la définition générale rappelée ci-dessus et comportant, au moins du côté "amont" (par référence au sens d'écoulement du fluide), un siège monté mobile dans la direction de l'axe selon lequel s'effectue cet écoulement, le siège étant soumis à la poussée d'au moins un ressort agissant dans le sens de son éloignement du tournant et étant relié au corps du robinet par une membrane annulaire, une chambre annulaire de volume relativement réduit, au moins du côté "amont", chambre dont une paroi est constituée par la membrane annulaire précitée et qui est relativement isolée des conditions "amont", de sorte que, en position fermée du robinet, les conditions "amont" assurent le maintien en pression de ladite chambre annulaire, ce qui a pour effet d'appliquer le siège sur l'obturateur ; et des moyens étant prévus pour assurer un équilibrage de la pression de fluide de part et d'autre dudit siège, préalablement à l'ouverture du robinet.

Un tel robinet à tournant sphérique, adapté à des utilisations sous de fortes pressions et à de hautes températures, est décrit dans le document FR-A-2564558 ou dans le document correspondant EP-A-0165186 (au nom de la Demanderesse). Grâce aux membranes métalliques, ou à des moyens équivalents tels que des tronçons de soufflets, et aussi aux moyens d'équilibrage, ce genre de robinet permet d'obtenir au moment de son ouverture, du côté "amont", une libération du siège de sorte que ce dernier n'est plus appliqué sur le tournant sphérique. La rotation du tournant peut alors s'effectuer aisément, sans frottement, et la manoeuvre du robinet vers la position d'ouverture peut ainsi être aisément réalisée, sans risque de grippage.

De plus, en position de fermeture, l'écart de pression existant entre l'amont et l'aval du robinet et s'exerçant sur la membrane métallique a pour effet d'appliquer le siège sur le tournant sphérique, et d'assurer ainsi l'étanchéité du robinet dans le sens amont-aval, le siège étant pourvu d'une lèvre annulaire d'étanchéité à son extrémité proche du tournant.

Toutefois, dans le robinet selon le document précité, la membrane annulaire conformée en soufflet délimite une chambre qui communique uniquement avec le côté "amont", et qui renferme par conséquent un fluide à la pression "amont". Les moyens d'équilibrage de pression comportent un conduit de by-pass avec une vanne de fermeture, qui relie la tubulure "amont" au volume central du robinet. Ainsi, l'équilibrage au niveau du soufflet se fait toujours à la pression "amont".

On connaît aussi, par le document FR-A-1586335, un robinet à tournant sphérique avec des moyens d'équilibrage des pressions entre le côté "amont" et le volume central du robinet. Dans le cas de ce document, le siège est monté de façon élastique mais ne peut être écarté du tournant sphérique, seule sa pression d'application sur le tournant étant variable.

L'équilibrage des pressions s'effectue ainsi, d'une façon générale, par rapport à la pression "amont", ce qui peut demander un temps important et peut s'avérer désavantageux, compte tenu des variations de cette pression.

La présente invention vise à perfectionner un robinet du genre rappelé jusqu'ici, de manière à améliorer encore ses performances au sens d'une meilleure étanchéité en position de fermeture, d'une diminution du couple à exercer pour sa manoeuvre, et d'une réduction de l'usure, en prévoyant un équilibrage qui, contrairement à la technique antérieure, n'est pas nécessairement lié à la pression "amont".

A cet effet, l'invention a essentiellement pour objet un robinet à tournant sphérique, tel que précisé ci-dessus et dans lequel ladite chambre annulaire fait partie des moyens d'équilibrage et dans lequel les moyens d'équilibrage comportent en outre des moyens pour la mise en communication non permanente de la chambre annulaire avec le volume central du robinet, dans lequel est logé le tournant sphérique, de manière à obtenir un équilibrage pratiquement instantané des pressions entre la chambre annulaire précitée et le volume central, l'isolement relatif de la chambre annulaire vis-à-vis des conditions "amont" permettant aux pressions et variations de pressions du volume central de s'étendre à cette chambre annulaire.

Cette chambre annulaire permet de conserver, lors de la manoeuvre d'ouverture ou de fermeture du robinet, un écart de pression nul sur la membrane, quelle que soit la géométrie du siège aval. Grâce aux moyens de mise en communication avec le volume central, et au(x) ressort(s) agissant sur le siège amont dans le sens de son éloignement du tournant, on obtient l'effacement ou la mise en retrait automatique de ce siège dans un premier temps de la manoeuvre d'ouverture, et préalablement au pivotement du tournant.

Un joint racleur, monté à l'intérieur du siège, peut être maintenu au contact du tournant, quelle que soit la position de ce siège, sous l'effet de la poussée d'au moins un autre ressort agissant dans le sens opposé au ressort précédemment nommé.

La chambre annulaire précitée peut être relativement isolée des conditions "amont" soit par au moins un trou calibré ménagé radialement dans le joint racleur, soit par un jeu radial prévu entre ce joint racleur et le corps du robinet. Le fait que la chambre en question possède un volume relativement réduit permet de réaliser d'une façon quasiment instantanée l'équi-pression avec le volume central, au moment de la mise en communication de ces deux volumes, l'isolement relatif de la chambre annulaire vis-à-vis des conditions "amont" permettant aux pressions et variations de pression du volume central de s'étendre à cette chambre annulaire. On obtient ainsi un parfait équilibre des pressions entre les deux volumes considérés, donc un écart de pression nul sur la membrane, malgré les variations de pression pouvant exister dans le volume central pendant les régimes transitoires.

Par contre, lorsque le robinet est fermé, le trou calibré ou le jeu équivalent assure le maintien en pression de la chambre considérée, ce qui a pour effet d'appliquer le siège sur l'obturateur par sa lèvre d'étanchéité, en surmontant la force du ou des ressorts qui repoussent ce siège.

Par ailleurs, l'isolement relatif de ladite chambre permet de la maintenir à l'écart des turbulences, et évite que des impuretés viennent y circuler ou y séjourner.

Selon un mode préféré de réalisation, les moyens de mise en communication de la chambre annulaire avec le volume central comprennent au moins un canal et/ou conduit internes, avec un obturateur actionné directement par les moyens de manoeuvre du tournant, en début d'ouverture et en fin de fermeture. On réalise ainsi des moyens d'équilibrage particulièrement simples et compacts, puisque ces moyens sont parfaitement intégrés au robinet, non seulement dans leur construction mais encore, et surtout, dans leur commande qui est automatiquement provoquée par la manoeuvre du robinet.

Selon une forme d'exécution particulière, les moyens de manoeuvre comprennent une tige de commande comportant une came qui coopère avec un poussoir agissant lui-même sur un obturateur mobile, par exemple en forme de bille soumise à l'effet d'un ressort, intercalé sur le canal et/ou conduit mettant la chambre annulaire en communication avec le volume central. Le poussoir peut être monté coulissant dans un conduit tubulaire, débouchant dans le volume central par au moins un orifice, et communiquant par au moins un trou, apte à être masqué ou découvert par l'obturateur, avec un canal débouchant dans la chambre annulaire.

Dans le cas d'un robinet bi-directionnel, le siège "amont" et le siège "aval" sont montés l'un et l'autre mobiles dans la direction de l'axe selon lequel s'effectue l'écoulement du fluide, chaque siège est associé à une membrane et à une chambre annulaire relativement isolée des conditions "amont" ou "aval" selon le cas, et les moyens de mise en communication relient le volume central du robinet à l'une et l'autre des chambres annulaires, avec mise en communication sélective.

Dans une telle réalisation parfaitement symétrique, chacun des deux sièges "amont" et "aval" est de préférence équipé, en plus de la membrane précitée, d'une contre-membrane qui intervient, pendant les phases d'équilibrage, pour protéger la membrane associée au siège du côté "aval" contre l'effet de pression inverse, qu'une membrane simple ne pourrait pas supporter.

De toute façon, l'invention sera mieux comprise à l'aide de la description qui suit, en référence au dessin schématique annexé représentant, à titre d'exemple non limitatif, quelques formes d'exécution de ce robinet à tournant sphérique :
Figure 1 est une vue en coupe longitudinale d'un robinet conforme à l'invention, montré en position ouverte ;
Figure 2 est une vue, à échelle agrandie, d'un détail de la figure 1, avec indication d'une variante ;
Figure 3 est une vue très schématique et en coupe d'un autre robinet conforme à l'invention, en position fermée ;
Figures 4 à 7 sont des vues similaires à figure 3, illustrant diverses phases de fonctionnement de ce dernier robinet.

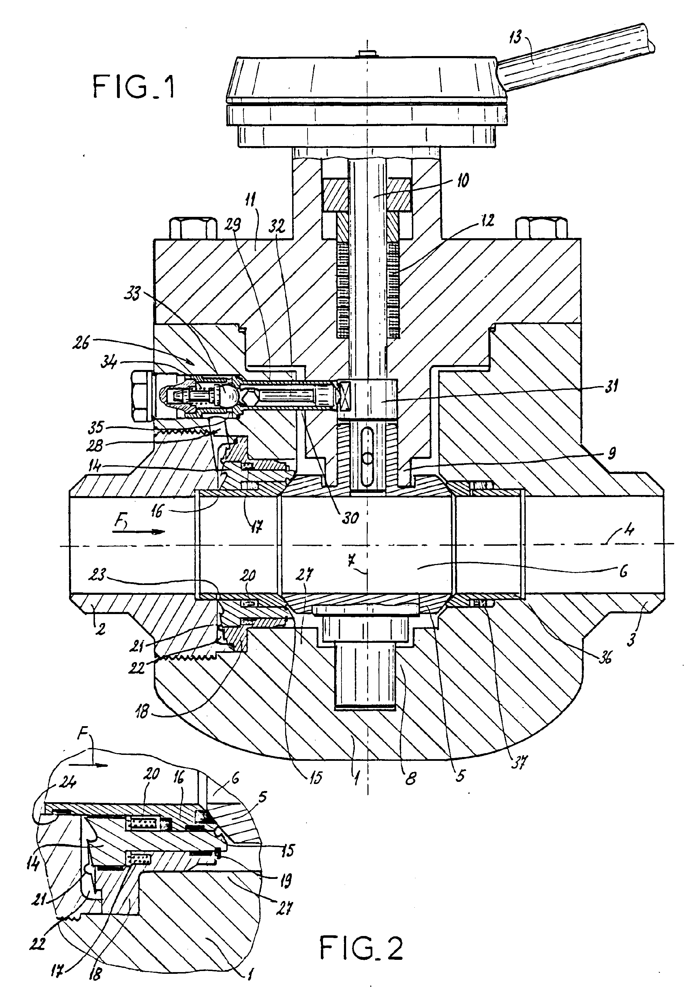

Le robinet représenté aux figures 1 et 2 comprend un corps 1, dont les deux extrémités forment des brides annulaires 2 et 3 prévues pour être raccordées à des tubulures extérieures servant au transport d'un fluide, s'écoulant suivant la direction d'un axe 4. A l'intérieur du corps 1 est disposé un obturateur ou "tournant" sphérique 5, comportant un passage central 6 de section circulaire correspondant à la section d'écoulement du fluide suivant l'axe 4. Le tournant sphérique 5, de type arbré est monté pivotant, autour d'un axe 7 perpendiculaire à l'axe 4 précédemment nommé, dans des paliers 8 et 9. L'actionnement du tournant 5 est réalisé par l'intermédiaire d'une tige de commande 10 montée tournante suivant l'axe 7 et traversant une pièce de fermeture 11 avec interposition de garnitures d'étanchéité 12, la tige de commande 10 étant elle-même actionnée au moyen d'un levier de manoeuvre extérieur 13.

L'écoulement du fluide selon l'axe 4 s'effectuant dans le sens indiqué par une flèche F, on peut distinguer par rapport au tournant 5 un côté "amont" où est disposé un siège 14 qui est monté mobile dans la direction de l'axe 4. Le siège 14 comporte, à son extrémité située du côté du tournant 5, une lèvre annulaire 15 prévue pour s'appuyer contre cet obturateur 5, tandis qu'un joint racleur 16, en forme de bague allongée, est monté à l'intérieur du siège 14.

Le siège 14 est soumis à la poussée permanente de ressorts 17, qui prennent appui sur une pièce annulaire 18 solidaire du corps 1 et qui tendent à éloigner ce siège 14 du tournant 5 jusqu'à une butée arrière aménagée en 19. Par ailleurs, le joint racleur 16 est maintenu en contact avec le tournant 5 par l'effet de la poussée d'autres ressorts 20, qui prennent appui sur un épaulement du siège 14.

Une membrane métallique 21, de forme annulaire, est soudée d'une part sur la face postérieure du siège 14, et d'autre part sur la face arrière de la pièce annulaire fixe 18. La membrane 21 délimite, avec les organes auxquels elle est soudée et avec le corps 1, une chambre "amont" annulaire 22. Cette chambre 22 est relativement isolée des conditions "amont", avec une communication limitée assurée soit par un trou calibré 23 ménagé radialement dans le joint racleur 16 (voir figure 1), soit en variante par un jeu radial 24 ménagé entre ce joint racleur 16 et le corps 1 (voir figure 2).

Le robinet comporte encore des moyens 26 pour la mise en communication de la chambre 22 avec la partie centrale du corps 1, et plus particulièrement avec le volume central 27 recevant le tournant sphérique 5. Dans l'exemple de réalisation selon la figure 1, ces moyens de mise en communication 26 comprennent un canal 28 percé dans le corps 1 à partir de la chambre 22, selon une direction sensiblement radiale, et un conduit tubulaire 29 parallèle à l'axe 4, avec des orifices 30 ouverts vers le volume central 27.

La tige de commande 10 comporte une came 31 qui coopère avec un poussoir 32 monté coulissant axialement dans le conduit tubulaire 29 et agissant lui-même sur une bille 33 soumise à l'effet d'un ressort 34. La bille 33 constitue un obturateur permettant de masquer ou de découvrir des trous 35, ménagés dans la paroi du conduit tubulaire 29 et aptes à assurer une communication entre ce dernier et le canal 28.

Lorsqu'à l'aide du levier de manoeuvre 13, on fait tourner la tige de commande 10 dans le sens de l'ouverture, on actionne tout d'abord les moyens de mise en communication 26 précédemment décrits, le tournant sphérique 5 ne pivotant pas immédiatement en raison du jeu. La came 31 déplace alors le poussoir 32 qui lui-même repousse la bille 33 à l'encontre de l'action du ressort 34, de sorte que les trous 35 sont découverts. On obtient ainsi, d'une manière pratiquement instantanée, un équilibrage des pressions entre la chambre "amont" 22 et le volume central 27.

Ensuite, cette phase d'équilibrage étant réalisée, la poursuite de la rotation de la tige de commande 10 provoque l'entraînement en rotation du tournant 5 autour de l'axe 7, jusqu'à la position d'ouverture montrée à la figure 1, la communication entre la chambre 22 et le volume 27 restant assurée durant tout le mouvement d'ouverture du robinet.

Dès la réalisation de cette communication, l'écart de pression s'exerçant sur la membrane 21 est annulé et le siège 14 s'écarte de l'obturateur 5, permettant ainsi la libre rotation de ce dernier, sans frottement.

Lorsqu'on manoeuvre la tige de commande 10 dans le sens de la fermeture, on rattrape tout d'abord le jeu puis on entraîne en rotation le tournant 5 autour de l'axe 7, les moyens 26 assurant toujours la communication entre la chambre 22 et le volume 27. Lorsque le tournant 5 parvient en position de fermeture complète, et simultanément avec la fin de rotation de la tige de commande 10 et de la came 31, la bille 33 vient masquer les trous 35, et la communication entre la chambre 22 et le volume 27 est interrompue. L'écart de pression auquel est alors soumise la membrane 21 provoque le retour du siège 14 contre l'obturateur 5.

Dans la forme d'exécution des figures 1 et 2, décrite jusqu'ici, le robinet est prévu pour être utilise avec un seul sens d'écoulement du fluide, indiqué par la flèche F. Du côté "aval" de ce robinet, la structure est donc simplifiée et comporte seulement un siège annulaire 36 poussé vers le tournant sphérique 5 par des ressorts 37.

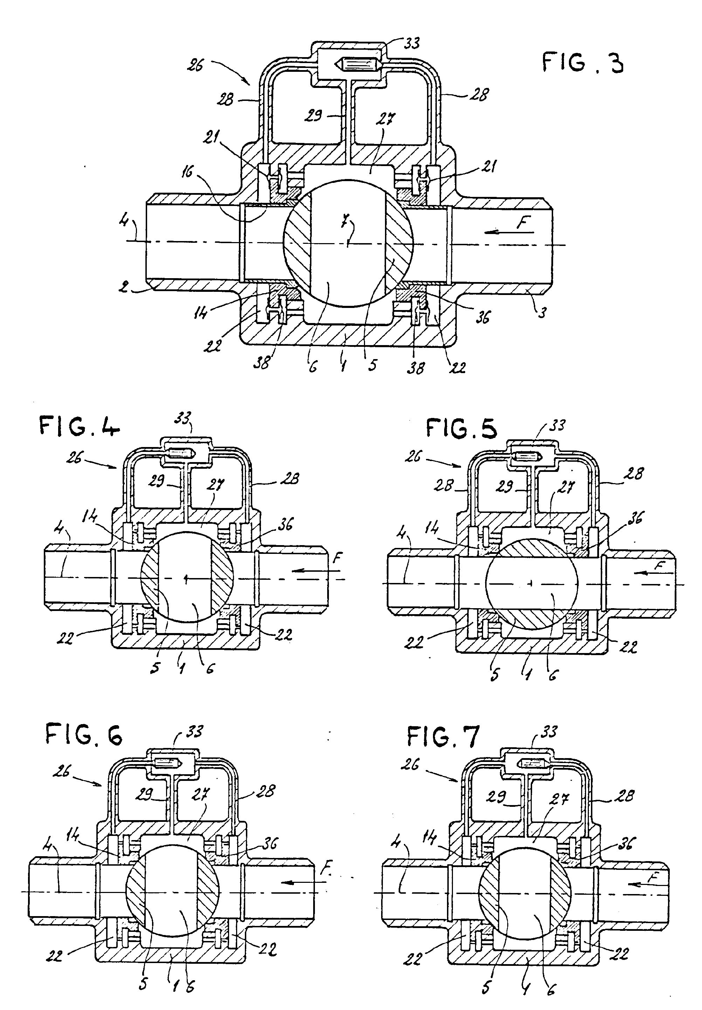

Au contraire, les figures 3 à 7 représentent, plus schématiquement, une autre forme d'exécution du robinet selon l'invention, utilisable pour les deux sens de circulation du fluide.

Dans ce robinet "bi-directionnel", le siège "aval" 36 est identique au siège "amont" 14, la structure étant symétrique par rapport à l'aie 7 de la tige de commande, et le principe reste le même que celui décrit Plus haut, notamment pour la formation d'une chambre annulaire 22 associée à chaque siège 14 ou 36 et relativement isolée, par un jeu ou un trou calibré, vis-à-vis des conditions de pression "amont" ou "aval" selon le cas.

A chaque siège 14 ou 36 est ici associée une double membrane permettant l'utilisation du robinet dans les deux sens de circulation, avec comme représenté au dessin, d'une part, une membrane 21 équivalente à celle décrite plus haut, donc située du côté de la chambre 22, et d'autre part, une contre-membrane 38 tournée vers la partie centrale du robinet, dont la fonction apparaîtra plus bas.

Les moyens de mise en communication 36 sont également symétriques, avec des canaux ou conduits 28 et 29, permettant de faire communiquer sélectivement le volume central 27 avec la chambre 22 associée à l'un ou l'autre des deux sièges 14 et 36. Un obturateur mobile 33 à deux positions, pouvant être actionné directement par la tige de commande du robinet, établit ou interrompt la communication entre le volume central 27 et l'une ou l'autre des deux chambres 22.

La figure 3 montre ce robinet en position fermée, avec l'obturateur 33 interrompant la communication entre le volume central 27 et la chambre 22 située du côté "amont" (par référence au sens de circulation F du fluide dans l'utilisation considérée). La figure 4 illustre la première phase d'ouverture du robinet, avec déplacement de l'obturateur 33 mettant le volume central 27 en communication avec la chambre "amont" 22. La figure 5 montre le robinet ouvert. La figure 6 illustre le robinet en cours de fermeture, et enfin la figure 7 montre le robinet en fin de fermeture, lorsque l'obturateur 33 est revenu en position d'interruption de la communication précédemment établie entre le volume central 27 et la chambre "amont" 22.

On notera que les contre-membranes 38 protègent les membranes 21, du côté "aval" dans l'utilisation considérée, de l'effet de pression inverse qui règne momentanément à l'intérieur du corps 1, pendant les phases d'équilibrage (figure 4) ou de fermeture (figure 6).

Comme il va de soi, l'invention ne se limite pas aux seules formes d'exécution de ce robinet à tournant sphérique qui ont été décrites ci-dessus, à titre d'exemples non limitatifs ; elle en embrasse, au contraire, toutes les variantes de réalisation et d'application couvertes par les revendications. En particulier, l'on ne s'éloignerait pas du cadre de l'invention en modifiant le détail des moyens de mise en communication du volume central avec la ou les chambres annulaires, ou en remplaçant ces moyens "intégrés" par un dispositif d'équilibrage extérieur remplissant la même fonction.

## Revendications

1. Robinet à tournant sphérique de type arbré, dans lequel un obturateur ou "tournant" (5) de forme sphérique, monté à l'intérieur du corps (1) du robinet et comportant un passage central (6), est guidé en rotation dans des paliers (8,9) et est lié à des moyens de manoeuvre (10 à 13) prévus pour le faire pivoter autour d'un axe (7) entre une position de fermeture et une position d'ouverture où le fluide peut s'écouler, suivant la direction d'un axe (4) perpendiculaire à l'axe de rotation (7) du tournant (5), au travers du passage central (6) de ce tournant (5), ce robinet comportant, au moins du côté "amont" (par référence au sens d'écoulement (F) du fluide), un siège (14) monté mobile dans la direction de l'axe (4) selon lequel s'effectue cet écoulement, le siège (14) étant soumis à la poussée d'au moins un ressort (17) agissant dans le sens de son éloignement du tournant (5) et étant relié au corps (1) du robinet par une membrane annulaire (21), une chambre annulaire (22) de volume relativement réduit, au moins du côté "amont", chambre dont une paroi est constituée par la membrane annulaire (21) précitée et qui est relativement isolée (en 23,24) des conditions "amont", de sorte que, en position fermée du robinet, les conditions "amont" assurent le maintien en pression de ladite chambre annulaire (22), ce qui a pour effet d'appliquer le siège (14) sur l'obturateur (5), et des moyens étant prévus pour assurer un équilibrage de la pression de fluide de part et d'autre dudit siège (14), préalablement à l'ouverture du robinet, caractérisé en ce que ladite chambre annulaire (22) fait partie des moyens d'équilibrage, et en ce que les moyens d'équilibrage comportent en outre des moyens (26) pour la mise en communication non permanente de la chambre annulaire (22) avec le volume central (27) du robinet, dans lequel est logé le tournant sphérique (5), de manière à obtenir un équilibrage pratiquement instantané des pressions entre la chambre annulaire précitée (22) et le volume central (27), l'isolement relatif de la chambre annulaire (22) vis-à-vis des conditions "amont" permettant aux pressions et s'étendre à cette chambre annulaire (22).

2. Robinet à tournant sphérique selon la revendication 1, caractérisé en ce qu'un joint racleur (16) est monté à l'intérieur du siège (14) et est maintenu au contact du tournant (5), quelle que soit la position de ce siège (14) sous l'effet de la poussée d'au moins un autre ressort (28) agissant dans le sens opposé au ressort (17) précédemment nommé.

3. Robinet à tournant sphérique selon la revendication 2, caractérisé en ce que la chambre annulaire précitée (22) est relativement isolée des conditions "amont" par au moins un trou calibré (23) ménagé radialement dans le joint racleur (16).

4. Robinet à tournant sphérique selon la revendication 2, caractérisé en ce que la chambre annulaire précitée (22) est relativement isolée des conditions "amont" par un jeu radial (24) prévu entre le joint racleur (16) et le corps (1) du robinet.

5. Robinet à tournant sphérique selon l'une quelconque des revendications 1 à 4, caractérisé en ce que les moyens de mise en communication (26) de la chambre annulaire (22) avec le volume central (27) comprennent au moins un canal (28) et/ou un conduit (29) internes, avec un obturateur (33) actionné directement par les moyens de manoeuvre (10 à 13, 31) du tournant (5), en début d'ouverture et en fin de fermeture.

6. Robinet à tournant sphérique selon la revendication 5, caractérisé en ce que les moyens de manoeuvre comprennent une tige de commande (10) comportant une came (31) qui coopère avec un poussoir (32) agissant lui-même sur un obturateur mobile (33), par exemple en forme de bille soumise à l'effet d'un ressort (34), intercalé sur le canal (28) et/ou conduit (29) mettant la chambre annulaire (22) en communication avec le volume central (27).

7. Robinet à tournant sphérique selon la revendication 6, caractérisé en ce que le poussoir (32) est monté coulissant dans un conduit tubulaire (29), débouchant dans le volume central (27) par au moins un orifice (30), et communiquant par au moins un trou (35), apte à être masqué ou découvert par l'obturateur (33), avec un canal (28) débouchant dans la chambre annulaire (22).

8. Robinet à tournant sphérique bi-directionnel selon l'une quelconque des revendications 1 à 7, caractérisé en ce que le siège "amont" (14) et le siège "aval" (36) sont montés l'un et l'autre mobiles dans la direction de l'axe (4) selon lequel s'effectue l'écoulement du fluide, en ce que chaque siège (14,36), est associé à une membrane (21) et à une chambre annulaire (22) relativement isolée des conditions "amont" et "aval" selon le cas, et en ce que les moyens de mise en communication (26) relient le volume central (27) du robinet à l'une et l'autre des chambres annulaires (22), avec mise en communication sélective.

9. Robinet à tournant sphérique bi-directionnel selon la revendication 8, caractérisé en ce que chacun des deux sièges "amont" (14) et "aval" (36) est équipé, en plus de la membrane précitée (21), d'une contre-membrane (38).

## Claims

1. Spherical-plug valve of the spindle type, in which a seal or "plug" (5), spherical in shape, mounted inside the body (1) of the valve and having a central passage (6), is guided so as to rotate in bearings (8, 9) and is connected to operating means (10 to 13) designed to cause it to pivot about an axis (7) between a closed position and an open position in which the fluid is able to flow, in the direction of an axis (4) at right angles to the axis of rotation (7) of the plug (5), through the central passage (6) of this plug (5), this valve having, at least on the "upstream" side (with reference to the direction of flow (F) of the fluid), a seat (14) mounted so as to be able to move in the direction of the axis (4) along which this flow occurs, the seat (14) being subject to the thrust of at least one spring (17) acting in the direction which moves it away from the plug (5) and being connected to the body (1) of the valve by an annular diaphragm (21), an annular chamber (22) of relatively small volume, at least on the "upstream" side, one wall of which consists of the aforesaid annular diaphragm (21) and which is relatively isolated (at 23, 24) from the "upstream" conditions, so that, when the valve is in the closed position, the "upstream" conditions ensure that the said annular chamber (22) is maintained under pressure, which has the effect of pressing the seat (14) against the seal (5), and means being provided to ensure a balancing of the fluid pressure on each side of the said seat (14), prior to the opening of the valve, characterised in that the said annular chamber (22) forms part of the balancing means and in that the balancing means include in addition means (26) for putting the annular chamber (22) into non-continuous communication with the central space (27) in the valve, in which the spherical plug (5) is housed, so as to obtain an almost instantaneous balancing of the pressures between the aforesaid annular chamber (22) and the central space (27), the relative isolation of the annular chamber (22) with respect to the "upstream" conditions enabling the pressures and pressure variations in the central space (27) to extend to this annular chamber (22).

2. Spherical-plug valve according to Claim 1, characterised in that a scraper joint (16) is mounted on the inside of the seat (14) and is held in contact with the plug (5), whatever the position of this seat (14), under the effect of the thrust of at least one other spring (28) acting in the opposite direction to the previously mentioned spring (17).

3. Spherical-plug valve according to Claim 2, characterised in that the aforesaid annular chamber (22) is relatively isolated from the "upstream" conditions by at least one calibrated hole (23) provided radially in the scraper joint (16).

4. Spherical-plug valve according to Claim 2, characterised in that the aforesaid annular chamber (22) is relatively isolated from the "upstream" conditions by a radial clearance (24) provided between the scraper joint (16) and the body (1) of the valve.

5. Spherical-plug valve according to any one of Claims 1 to 4, characterised in that the means for putting the annular chamber (22) into communication (26) with the central space (27) comprise at least one internal pipe (28) and/or duct (29), with a seal (33) actuated directly by the means (10 to 13, 31) for operating the plug (5), at the beginning of opening and at the end of closing.

6. Spherical-plug valve according to Claim 5, characterised in that the operating means comprise an actuating rod (10) having a cam (31) which cooperates with a pushrod (32) itself acting on a moving seal (33), for example one in the shape of a ball acted on by a spring (34), interposed in the pipe (28) and/or duct (29) putting the annular chamber (22) into communication with the central space (27).

7. Spherical-plug valve according to Claim 6, characterised in that the pushrod (32) is mounted so as to slide in a tubular duct (29) opening out into the central space (27) through at least one orifice (30) and communicating through at least one aperture (35), able to be covered or uncovered by the seal (33), with a channel (28) opening out into the annular chamber (22).

8. Two-directional spherical-plug valve according to any one of Claims 1 to 7, characterised in that the "upstream" seat (14) and the "downstream" seat (36) are mounted so that they are both able to move in the direction of the axis (4) along which the flow of the fluid occurs, in that each seat (14, 36) is associated with a diaphragm (21) and an annular chamber (22) which is relatively isolated from the "upstream" and "downstream" conditions according to circumstances, and in that the means (26) for putting in communication connect the central space (27) of the valve to each of the annular chambers (22), with selective connection.

9. Two-directional spherical-plug valve according to Claim 8, characterised in that each of the two seats, "upstream" (14) and "downstream" (36), is equipped, in addition to the aforesaid diaphragm (21), with a counter-diaphragm (38).

## Patentansprüche

1. Hahn mit Kugelküken vom mit einer Lagerwelle versehenen Typ, bei welchem ein Verschlußstück oder "Küken" (5) in Kugelform, welches im Inneren des Hahnkörpers (1) angeordnet ist und einen zentralen Kanal (6) aufweist, in Lagern (8, 9) drehgeführt und mit Betätigungsmitteln (10 bis 13) verbunden ist, die dazu dienen, dieses um eine Achse (7) zwischen einer Schließstellung sowie einer Öffnungsstellung zu drehen, bei der das Fluid entlang der senkrecht zur Drehachse (7) des Kükens (5) stehenden Richtung einer Achse (4) durch den zentralen Kanal (6) dieses Kükens (5) strömen kann, wobei dieser Hahn zumindest auf der (bezogen auf die Strömungsrichtung (F) des Fluides) "stromaufwärtigen" Seite einen Sitz (14) aufweist, welcher in Richtung der Achse (4), in der diese Strömung erfolgt, beweglich gelagert ist, wobei der Sitz (14) der Schubkraft wenigstens einer Feder (17) unterworfen ist, die in der Richtung von dessen Abheben vom Küken (5) wirkt und mit dem Hahnkörper (1) über eine Ringmembran (21) verbunden ist, wobei zumindest an der "stromaufwärtigen" Seite eine Ringkammer (22) von verhältnismäßig geringem Volumen vorgesehen ist, deren eine Wand durch die vorgenannte Ringmembran (21) gebildet ist und die von den "stromaufwärtigen" Bedingungen (bei 23,24) relativ isoliert ist derart, daß in der Schließstellung des Hahns die "stromaufwärtigen" Bedingungen die Aufrechterhaltung des Druckes in der genannten Ringkammer (22) sicherstellen mit der Wirkung, daß der Sitz (14) an das Verschlußstück (5) angedrückt wird, und wobei eine Vorrichtung vorgesehen ist, um ein Gleichgewicht des Fluiddruckes zu beiden Seiten dieses Sitzes (14) vor dem Öffnen des Hahns sicherzustellen, dadurch **gekennzeichnet**, daß die Ringkammer (22) Teil der Gleichgewichtsvorrichtung ist und daß die Gleichgewichtsvorrichtung darüber hinaus Mittel (26) umfaßt, um die Ringkammer (22) in eine nicht andauernde Verbindung mit dem zentralen Raum (27) des Hahns zu bringen, in welchem das Kugelküken (5) angeordnet ist, so daß man ein praktisch sofortiges Gleichgewicht der Drücke zwischen der vorgenannten Ringkammer (22) und dem zentralen Raum (27) erhält, wobei die relative Isolierung der Ringkammer (22) gegenüber den "stromaufwärtigen" Bedingungen es erlaubt, daß sich die Drücke und Druckänderungen des zentralen Raumes (27) in diese Ringkammer (22) ausbreiten.

2. Hahn mit Kugelküken nach Anspruch 1, dadurch **gekenn****zeichnet**, daß im Inneren des Sitzes (14) eine Abstreifdichtung (16) angeordnet ist und bei jeder beliebigen Stellung dieses Sitzes (14) unter der Wirkung der Schubkraft zumindest einer anderen Feder (28), die in der gegenüber der zuvor genannten Feder (17) entgegengesetzten Richtung wirkt, in Kontakt mit dem Küken (5) gehalten wird.

3. Hahn mit Kugelküken nach Anspruch 2, dadurch **gekennzeichnet**, daß die zuvor genannte Ringkammer (22) von den "stromaufwärtigen" Bedingungen durch zumindest eine radial in der Abstreifdichtung (16) ausgebildete kalibrierte Öffnung (23) relativ isoliert ist.

4. Hahn mit Kugelküken nach Anspruch 2, dadurch **gekenn****zeichnet**, daß die zuvor genannte Ringkammer (22) von den "stromaufwärtigen" Bedingungen durch ein zwischen der Abstreifdichtung (16) und dem Körper (1) des Hahns vorgesehenes Radialspiel (24) relativ isoliert ist.

5. Hahn mit Kugelküken nach einem der Ansprüche 1 bis 4, dadurch **gekennzeichnet**, daß die Vorrichtung (26) zur Herstellung einer Verbindung von der Ringkammer (22) zum zentralen Raum (27) zumindest einen internen Kanal (28) und/oder eine interne Leitung (29) mit einem Verschlußstück (33) umfaßt, welches direkt durch die Betätigungsmittel (10 bis 13, 31) des Kükens (5) zu Beginn des Öffnungsvorganges und zum Ende des Schließvorganges betätigt wird.

6. Hahn mit Kugelküken nach Anspruch 5, dadurch **gekennzeichnet**, daß die Betätigungsmittel einen Betätigungsschaft (10) umfassen, welcher einen Nocken (31) aufweist, der mit einem Stößel (32) zusammenwirkt, welcher seinerseits auf ein bewegliches Verschlußstück (33), beispielsweise in Form einer der Wirkung einer Feder (34) ausgesetzten Kugel, einwirkt, welches in dem Kanal (28) und/ oder der Leitung (29) angeordnet ist, die die Ringkammer (22) mit dem zentralen Raum (27) in Verbindung bringt.

7. Hahn mit Kugelküken nach Anspruch 6, dadurch **gekennzeichnet**, daß der Stößel (32) in einer Rohrleitung (29) verschiebbar angeordnet ist, die über zumindest eine Mündungsöffnung (30) in den zentralen Raum (27) mündet und die über zumindest eine Öffnung (35), welche durch das Verschlußstück (33) abgedeckt oder freigegeben werden kann, mit einem Kanal (28) in Verbindung steht, welcher in die Ringkammer (22) mündet.

8. Hahn mit bidirektionalem Kugelküken nach einem der Ansprüche 1 bis 7, dadurch **gekennzeichnet,** daß der "stromaufwärtige" Sitz (14) und der "stromabwärtige" Sitz (36) jeweils in der Richtung der Achse (4) beweglich angeordnet sind, in der die Strömung des Fluides erfolgt, daß jedem Sitz (14, 36) eine Membran (21) und eine Ringkammer (22) zugeordnet ist, die von den "stromaufwärtigen" und "stromabwärtigen" Bedingungen, je nach dem Einsatzfall, relativ isoliert ist, und daß die Mittel (26) zur Verbindungsherstellung den zentralen Raum (27) des Hahns mit der einen oder der anderen der Ringkammern (22) verbindet, und zwar mit wahlweiser Verbindungsherstellung.

9. Hahn mit bidirektionalem Kugelküken nach Anspruch 8, dadurch **gekennzeichnet**, daß sowohl der "stromaufwärtige" Sitz (14) als auch der "stromabwärtige" Sitz (36) zusätzlich zu der vorgenannten Membran (21) mit einer Gegenmembran (38) ausgestattet ist.
